(19) **Europäisches Patentamt / European Patent Office / Office européen des brevets**

(11) **EP 4 749 947 A1**

(12) **EUROPEAN PATENT APPLICATION**
published in accordance with Art. 153(4) EPC

(43) Date of publication:
**27.05.2026 Bulletin 2026/22**

(21) Application number: **24855280.4**

(22) Date of filing: **26.03.2024**

(51) International Patent Classification (IPC):
**H04B 7/06** (2006.01)

(52) Cooperative Patent Classification (CPC):
**H04B 7/0456; H04B 7/06**

(86) International application number:
**PCT/CN2024/083910**

(87) International publication number:
**WO 2025/039549 (27.02.2025 Gazette 2025/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.08.2023 CN 202311079702**

(71) Applicant: **ZTE Corporation**
**Shenzhen, Guangdong 518057 (CN)**

(72) Inventors:
• **YE, Xinquan**
  **Shenzhen, Guangdong 518057 (CN)**
• **CHEN, Yijian**
  **Shenzhen, Guangdong 518057 (CN)**

• **ZHANG, Shujuan**
  **Shenzhen, Guangdong 518057 (CN)**
• **YU, Guanghui**
  **Shenzhen, Guangdong 518057 (CN)**
• **WANG, Yunlu**
  **Shenzhen, Guangdong 518057 (CN)**
• **LU, Guangyan**
  **Shenzhen, Guangdong 518057 (CN)**
• **YU, Hongkang**
  **Shenzhen, Guangdong 518057 (CN)**
• **YANG, Li**
  **Shenzhen, Guangdong 518057 (CN)**

(74) Representative: **Aipex B.V.**
**Vestdijk 51**
**5611 CA Eindhoven (NL)**

(54) **CHANNEL STATE INFORMATION FEEDBACK METHOD, INDICATION INFORMATION SENDING METHOD, COMMUNICATION NODE AND STORAGE MEDIUM**

(57) Provided are a channel state information feedback method, an indication information sending method, a communication node, and a storage medium. The channel state information feedback method includes receiving indication information, determining a target basis vector and a basis vector valid row indication bit according to the indication information, determining a codebook according to the target basis vector and the basis vector valid row indication bit, and feeding back channel state information using the codebook.

Receive signaling information — 110

Determine a target basis vector and a basis vector valid row indication bit according to the indication information — 120

Determine a codebook according to the target basis vector and the basis vector valid row indication bit — 130

Feed back channel state information using the codebook — 140

**FIG. 1**

EP 4 749 947 A1

**Description**

TECHNICAL FIELD

This application relates to the field of wireless communication technologies, for example, to a channel state information feedback method, an indication information sending method, a communication node, and a storage medium.

BACKGROUND

Extremely massive multiple-input multiple-output (Extreme Massive MIMO or E-M-MIMO) and extremely large aperture array (ELAA) have received increasing attention as potential key technical points in the multi-antenna direction for B5G/6G. Compared with the current New Radio (NR) Massive MIMO, the number of antennas in ELAA increases significantly, reaching thousands. In ELAA, energy from only a portion of the antennas is transmitted to a receiving panel of a user equipment (UE), resulting in non-stationarity of a channel.

In potential application scenarios of ELAA, such as large stadiums, shopping malls, airports, and automated factories, the spatial distribution of UEs is highly complex. There may be dense and numerous UEs in some areas, sparse and few UEs in some areas, and a moderate density and number of UEs in other areas. This leads to large differences in service requirements for UEs at different spatial locations and substantial differences in the non-stationary characteristics of channels for UEs at different locations. The channel state information feedback process in the related art ignores the non-stationary characteristics of the channels, which causes loss in transmission performance.

SUMMARY

This application provides a channel state information feedback method, an indication information sending method, a communication node, and a storage medium.

Embodiments of this application provide a channel state information feedback method. The method includes the following:

Indication information is received.

A target basis vector and a basis vector valid row indication bit are determined according to the indication information.

A codebook is determined according to the target basis vector and the basis vector valid row indication bit.

Channel state information is fed back using the codebook.

Embodiments of this application also provide an indication information sending method. The method includes the following:

Indication information is sent, where the indication information is used to indicate a target basis vector and a basis vector valid row indication bit.

Channel state information fed back by using a codebook is received, where the codebook is determined according to the target basis vector and the basis vector valid row indication bit.

Embodiments of this application also provide a communication node. The communication node includes a memory, a processor, and a computer program stored in the memory and executable on the processor, where the processor, when executing the computer program, performs the preceding channel state information feedback method or indication information sending method.

Embodiments of this application also provide a computer-readable storage medium. The computer-readable storage medium stores a computer program that, when executed by a processor, performs the preceding channel state information feedback method or indication information sending method.

BRIEF DESCRIPTION OF DRAWINGS

FIG. 1 is a flowchart of a channel state information feedback method according to an embodiment.

FIG. 2 is a flowchart of an indication information sending method according to an embodiment.

FIG. 3 is a diagram of antenna port indices according to an embodiment.

FIG. 4 is a diagram of antenna port indices according to an embodiment.

FIG. 5 is a diagram of a visible region according to an embodiment.

FIG. 6 is a diagram of another visible region according to an embodiment.

FIG. 7 is a diagram of yet another visible region according to an embodiment.

FIG. 8 is a diagram of another visible region according to an embodiment.

FIG. 9 is a diagram illustrating that a basis vector valid row indication bit is determined according to an embodiment.

FIG. 10 is a diagram of a visible region changing with position information according to an embodiment.

FIG. 11 is a diagram illustrating the structure of a channel state information feedback apparatus according to an embodiment.

FIG. 12 is a diagram illustrating the structure of an indication information sending apparatus according to an embodiment.

FIG. 13 is a diagram illustrating the hardware structure of a communication node according to an embodiment.

DETAILED DESCRIPTION

This application is described in conjunction with drawings and embodiments. It is to be understood that the specific embodiments described herein are intended to explain this application and not to limit this application. It is to be noted that if not in collision, embodiments of this application and features therein may be combined with each other in any manner. Additionally, it is to be noted that for ease of description, only part, not all, of structures related to this application are illustrated in the drawings. In the embodiments of this application, terms such as "first" and "second" are only used to describe or distinguish objects and do not represent a sequence or priority.

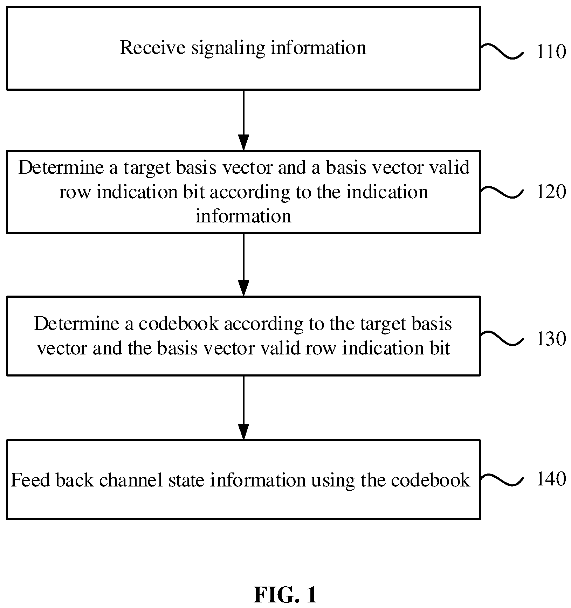

FIG. 1 is a flowchart of a channel state information feedback method according to an embodiment. The method may be applied to a first communication node. The first communication node mainly refers to a node that receives indication information and feeds back channel state information, for example, a UE. As shown in FIG. 1, the method provided in this embodiment includes 110 to 140.

In step 110, signaling information is received.

In step 120, a target basis vector and a basis vector valid row indication bit are determined according to the indication information.

In step 130, a codebook is determined according to the target basis vector and the basis vector valid row indication bit.

In step 140, channel state information is fed back using the codebook.

In this embodiment, a target basis vector and a basis vector valid row indication bit are determined according to the indication information, a codebook is determined based on the target basis vector and the basis vector valid row indication bit, and channel state information is fed back, thereby improving the quality of the codebook and the reliability of fed-back channel state information considering the non-stationary characteristics of the channel.

In an embodiment, the indication information includes first indication information and second indication information. The first indication information includes configuration information of a basis vector. The second indication information includes at least one of bitmap signaling, a basis vector valid row indication bit variable, a basis vector valid row indication bit mapping function, a visible region mapping function, or position information.

In an embodiment, the basis vector is an N*1 vector (N is an integer greater than 1), and N is the number of antenna ports.

The basis vector may be generated in any one of the following manners: directly constituted by a single discrete Fourier transform (DFT) vector; obtained by weighting elements of each row of a single DFT vector; obtained by taking a Kronecker product of two DFT vectors; and obtained by taking a Kronecker product of two row-weighted DFT vectors.

In an embodiment, determining the target basis vector and the basis vector valid row indication bit according to the indication information includes determining the target basis vector according to the first indication information; and determining the basis vector valid row indication bit according to the second indication information.

In an embodiment, determining the codebook according to the target basis vector and the basis vector valid row indication bit includes determining an extended vector according to the target basis vector and the basis vector valid row indication bit, and determining the codebook according to the extended vector.

In an embodiment, the basis vector valid row indication bit is variable at different moments.

In an embodiment, the basis vector valid row indication bit is used to indicate a row index of the target basis vector.

In an embodiment, the basis vector valid row indication bit variable consists of one element, or the basis vector valid row indication bit variable consists of multiple different elements.

The multiple different elements include consecutive integers or non-consecutive integers.

In an embodiment, the method also includes determining an association relationship between an antenna port index of an ELAA and a visible region according to the basis vector valid row indication bit.

In an embodiment, the position information includes real-time three-dimensional coordinate information or real-time two-dimensional coordinate information.

In an embodiment, the visible region mapping function is indicated by higher-layer signaling and is used to indicate a functional relationship between the position information and the basis vector valid row indication bit.

In an embodiment, the basis vector valid row indication bit mapping function is indicated by higher-layer signaling and is used to indicate a functional relationship between the basis vector valid row indication bit variable and the basis vector valid row indication bit.

In an embodiment, a value of each bit in the bitmap signaling is used to indicate whether a corresponding row in the target basis vector is valid.

In an embodiment, determining the basis vector valid row indication bit according to the basis vector valid row indication bit variable and the basis vector valid row indication bit mapping function includes one of the following: determining the basis vector valid row indication bit according to one set of basis vector valid row indication bit variables and one basis vector valid row indication bit mapping function; determining the basis vector valid row indication bit according to one set of basis vector valid row indication bit variables and multiple different basis vector valid row indication bit mapping functions; determining the basis vector valid row indication bit according to multiple different sets of basis vector valid row indication bit variables and one basis vector valid row indication bit mapping function; or determining the basis vector valid row indication bit according to multiple different sets of basis vector valid row indication bit variables and multiple different basis vector valid row indication bit mapping functions.

In an embodiment, the basis vector valid row indication bit is determined according to the position information and the visible region mapping function.

Determining the basis vector valid row indication bit according to the position information and the visible region mapping function includes one of the following: determining the basis vector valid row indication bit according to the real-time three-dimensional coordinate information and one visible region mapping function; determining the basis vector valid row indication bit according to the real-time three-dimensional coordinate information and multiple visible region mapping functions; determining the basis vector valid row indication bit according to the real-time two-dimensional coordinate information and one visible region mapping function; or determining the basis vector valid row indication bit according to the real-time two-dimensional coordinate information and multiple visible region mapping functions.

In an embodiment, determining the basis vector valid row indication bit according to the bitmap signaling includes one of the following: determining the basis vector valid row indication bit according to a single bitmap signaling; or jointly determining the basis vector valid row indication bit according to multiple bitmap signalings.

In an embodiment, determining the extended vector according to the target basis vector and the basis vector valid row indication bit includes keeping elements of corresponding valid rows of the target basis vector unchanged, and setting elements of non-valid rows of the target basis vector to zero, to obtain the extended vector.

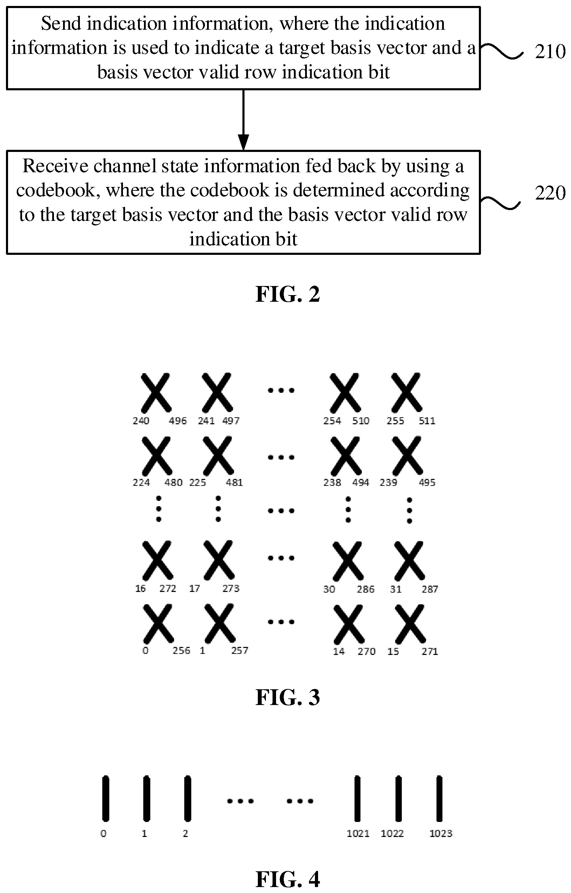

FIG. 2 is a flowchart of an indication information sending method according to an embodiment. The method may be applied to a second communication node. The second communication node mainly refers to a node that sends indication information and receives channel state information, for example, a base station (BS), an access point (AP), or a transmission and reception point (TRP). As shown in FIG. 2, the method provided in this embodiment includes 210 and 220.

In step 210, indication information is sent, where the indication information is used to indicate a target basis vector and a basis vector valid row indication bit.

In step 220, channel state information fed back by using a codebook is received, where the codebook is determined according to the target basis vector and the basis vector valid row indication bit.

In this embodiment, the first communication node is instructed, by using the indication information, about the target basis vector and the basis vector valid row indication bit, a codebook is determined based on the target basis vector and the basis vector valid row indication bit, and channel state information is fed back, thereby improving the quality of the codebook and the reliability of fed-back channel state information considering the non-stationary characteristics of the channel.

In an embodiment, the indication information includes first indication information and second indication information.

The first indication information includes configuration information of a basis vector.

The second indication information includes at least one of bitmap signaling, a basis vector valid row indication bit variable, a basis vector valid row indication bit mapping function, a visible region mapping function, or position information.

The channel state information feedback method or the indication information sending method is exemplarily described below through embodiments.

Embodiment one

In this embodiment, the association relationship between the basis vector valid row indication bit and the antenna port indices of the ELAA, the effective antenna port indices of the ELAA, and the visible region information of the UE in the ELAA, as well as the meaning of the visible region (VR) in different scenarios is described.

The antenna port indices of the ELAA refer to the sorting indices of all antenna elements in the antenna panel. FIG. 3 is a diagram of antenna port indices according to an embodiment. As shown in FIG. 3, for the antenna port index of a 512-antenna dual-polarized uniform planar array (UPA), the indexing rule is the polarization dimension first, then the horizontal dimension, and finally the vertical dimension. The positive directions of the horizontal dimension and the vertical dimension are rightward and upward, respectively. The index starts from 0 and increases by 1 sequentially according to the indexing rule. FIG. 4 is a diagram of antenna port indices according to an embodiment. As shown in FIG. 4, for the antenna port index of a 1024-antenna uniform linear array (ULA), the indexing rule follows the horizontal dimension. The positive direction of the horizontal dimension is rightward. The index starts from 0 and increases by 1 sequentially according to the indexing rule.

The number of antenna ports of the ELAA is not limited to 512 or 1024 and may be other positive integers. The antenna port indexing rules of the ELAA in the preceding examples are for reference only, and other possible rules are not excluded.

The effective antenna port indices of the ELAA are antenna port indices of the ELAA that are effective for the UE.

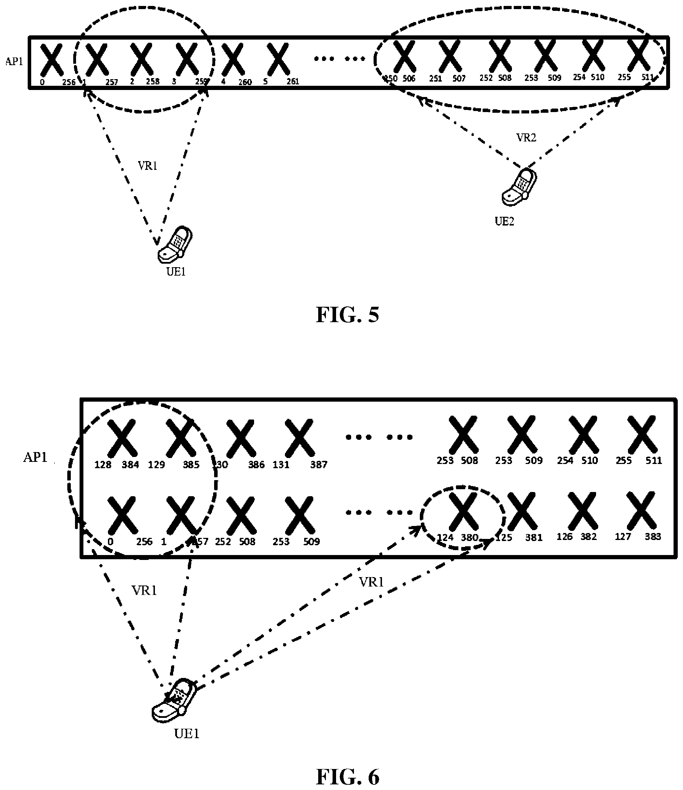

The visible region information of the ELAA for the UE is the range of the antenna panel area of the ELAA that is effective for the UE. The visible region ranges for UEs at different locations are different. FIG. 5 is a diagram of a visible region according to an embodiment. As shown in FIG. 5, AP 1 is a 512-antenna dual-polarized ULA. The visible regions for UE 1 and UE 2 are VR1 and VR2, respectively, that is, columns 2 to 4 and columns 251 to 256 of the ULA. The effective antenna port indices of AP 1 for UE 1 and UE 2 are {1, 2, 3, 257, 258, 259} and {250, 251, 252, 253, 254, 255, 506, 507, 508, 509, 510, 511}, respectively. The basis vector valid row indication bits for UE 1 and UE 2 are {2, 3, 4, 258, 259, 260} and {251, 252, 253, 254, 255, 256, 507, 508, 509, 510, 511, 512}, respectively.

The visible region range of the UE is not necessarily limited to a single continuous region and may be constituted by multiple local continuous regions at different positions. FIG. 6 is a diagram of another visible region according to an embodiment. As shown in FIG. 6, AP 1 is a 512-antenna dual-polarized UPA. The visible region VR1 of UE 1 is formed by combining two independent regions, that is, the region constituted by rows 1 to 2 and columns 1 to 3 of the UPA and the region constituted by row 1 and column 125 of the UPA. The effective antenna port indices of AP 1 for UE 1 are {0, 1, 128, 129, 256, 257, 384, 385, 124, 380}. The basis vector valid row indication bit for UE 1 is {1, 2, 129, 130, 257, 258, 385, 386, 125, 381}.

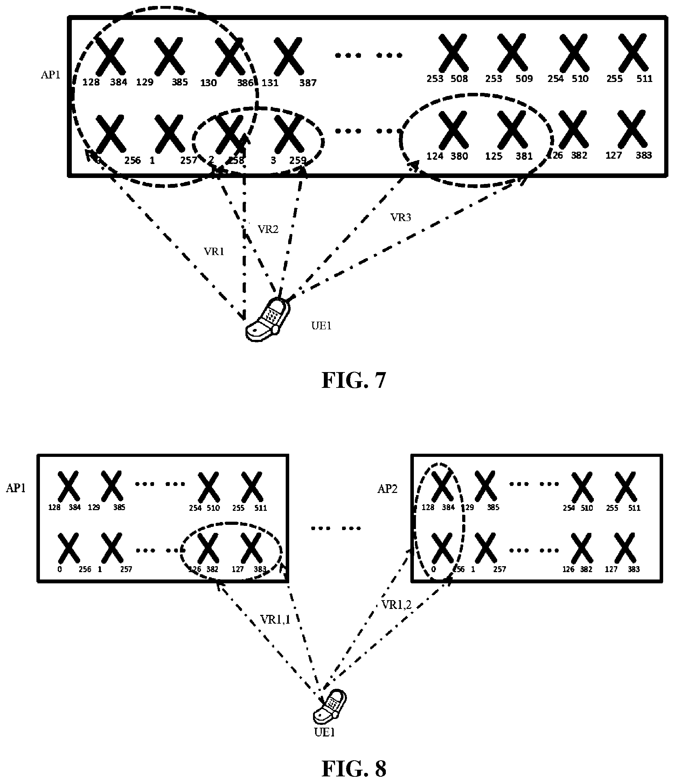

When the UE includes multiple receive antennas or multiple receive antenna panels, different receive antenna groups or receive antenna panels of the UE may perform layered independent reception. Each transmission layer of the UE has a corresponding visible region, and the visible regions of different transmission layers of the UE are independent. FIG. 7 is a diagram of yet another visible region according to an embodiment. As shown in FIG. 7, UE 1 has 3 transmission layers, and the VRs of each transmission layer are VR1, VR2, and VR3, respectively. The effective antenna port indices corresponding to UE 1 are {0, 1, 2, 128, 129, 130, 256, 257, 258, 384, 385, 386}, {2, 3, 258, 259}, and {124, 125, 380, 381}, respectively. The basis vector valid row indication bits for each transmission layer of UE 1 are {1, 2, 3, 129, 130, 131, 257, 258, 259, 385, 386, 387}, {3, 4, 259, 260}, and {125, 126, 381, 382}, respectively.

When the UE is served by multiple different APs through coordinated transmission, the visible regions of each coordinated AP are independent. The basis vector of the UE is obtained by extending basis vector rows corresponding to different coordinated APs. FIG. 8 is a diagram of another visible region according to an embodiment. As shown in FIG. 8, AP 1 and AP 2 perform coordinated transmission for UE 1. The VRs of AP 1 and AP 2 are VR1,1 and VR1,2, respectively. The effective antenna port indices corresponding to AP 1 and AP 2 are {126, 127, 382, 383} and {0, 128, 256, 384}, respectively. Since the basis vector of UE 1 is obtained by extending basis vector rows corresponding to AP 1 and AP 2, with the row index of the basis vector corresponding to AP 1 as the reference point, the row index of the basis vector corresponding to AP 2 is the original row index of AP 2 plus the total number of antenna ports of AP 1, that is, 512. Therefore, the basis vector valid row indices corresponding to VR1,1 and VR1,2 are {127, 128, 383, 384} and {513, 641, 769, 897}, respectively.

Embodiment two

In this embodiment, the connotation of position information is described when position information is used in the manner of determining the basis vector valid row indication bit. The position information may refer to real-time 3D or 2D coordinate information of the UE. The real-time 2D coordinate information of the UE may be expressed as (x, y) or (r, θ). The real-time 3D coordinate information of the UE may be expressed in the form of (x, y, z) or (r, θ, φ).

Embodiment three

In this embodiment, a specific manner of determining the basis vector valid row indication bit using bitmap signaling is described.

The manner of determining the basis vector valid row indication bit according to the bitmap signaling includes directly determining the basis vector valid row indication bit according to a single bitmap signaling; or jointly determining the basis vector valid row indication bit according to multiple bitmap signalings.

The manner of directly determining the basis vector valid row indication bit according to a single bitmap signaling means that the value of each bit in the single bitmap signaling directly indicates whether a certain row of the basis vector is valid. A bit value of 1 may indicate that the row corresponding to the bit in the basis vector is selected as valid, or a bit value of 0 may indicate that the row corresponding to the bit in the basis vector is selected as valid. The total length of the bitmap represents the total number of rows in the basis vector.

For example, the basis vector is a vector with a size of 8*1, and it is desired to select rows 2 and 5 of the basis vector.

When the basis vector valid row indication bit is directly determined according to a single bitmap signaling, if it is agreed that a bit value of 1 indicates a selection of the row corresponding to the bit in the basis vector, the bitmap signaling is 00010010, where the second and fifth bits are 1 and the remaining bits are 0; if it is agreed that a bit value of 0 indicates a selection of the row corresponding to the bit in the basis vector, the bitmap signaling is 11101101, where the second and fifth bits are 0 and the remaining bits are 1. Both of the preceding different bitmap signalings can determine that rows 2 and 5 of the basis vector are selected.

The manner of jointly determining the basis vector valid row indication bit according to multiple bitmap signalings involves grouping the row indices of the basis vector and then jointly indicating the basis vector valid row indication bit by using inter-group bitmaps and intra-group bitmaps. The advantage of using multiple bitmap signalings is that signaling overhead can be effectively reduced when the number of rows in the basis vector is particularly large. Each bit in the bitmap may be agreed to have a value of 1 or 0 to indicate a valid selection.

For example, the basis vector is a vector with a size of 256*1, and it is necessary to select rows 1, 2, 129, 130, 17, 18, 145, and 146 of the basis vector. All row indices are divided into 16 equal groups in ascending order, with each group containing 16 members. The basis vector valid row indication bits are distributed in the 1st, 2nd, 9th, and 10th index groups. Therefore, a total of 5 bitmap signalings are required to indicate the basis vector valid row indication bit. The first bitmap indicates all groups in which the basis vector valid row indication bits are located, and the 2nd to 4th bitmaps indicate the indices of the basis vector valid row indication bits within the corresponding subgroups.

The first bitmap signaling is 0000001100000011, indicating the selection of the 1st, 2nd, 9th, and 10th groups. The 2nd to 4th bitmap signalings are 0000000000000011, 0000000000000011, and 0000000000000011, indicating the selection of rows 1 and 2 in the 1st, 2nd, 9th, and 10th groups.

In the manner of determining the basis vector valid row indication bit using multiple bitmap signalings, the number of bitmaps and the length of each bitmap depend on the number of rows in the basis vector and the basis vector valid row indication bit. Multiple different schemes exist, and the preceding examples are for reference only.

Embodiment four

In this embodiment, execution details of determining the basis vector valid row indication bit by using the basis vector valid row indication bit variable and the basis vector valid row indication bit mapping function are described.

The manner of determining the basis vector by using the basis vector valid row indication bit variable and the basis vector valid row indication bit mapping function includes determining the basis vector valid row indication bit according to one set of basis vector valid row indication bit variables and one basis vector valid row indication bit mapping function; determining the basis vector valid row indication bit according to one set of basis vector valid row indication bit variables and multiple different basis vector valid row indication bit mapping functions; determining the basis vector valid row indication bit according to multiple different sets of basis vector valid row indication bit variables and one basis vector valid row indication bit mapping function; or determining the basis vector valid row indication bit according to multiple different sets of basis vector valid row indication bit variables and multiple different basis vector valid row indication bit mapping functions.

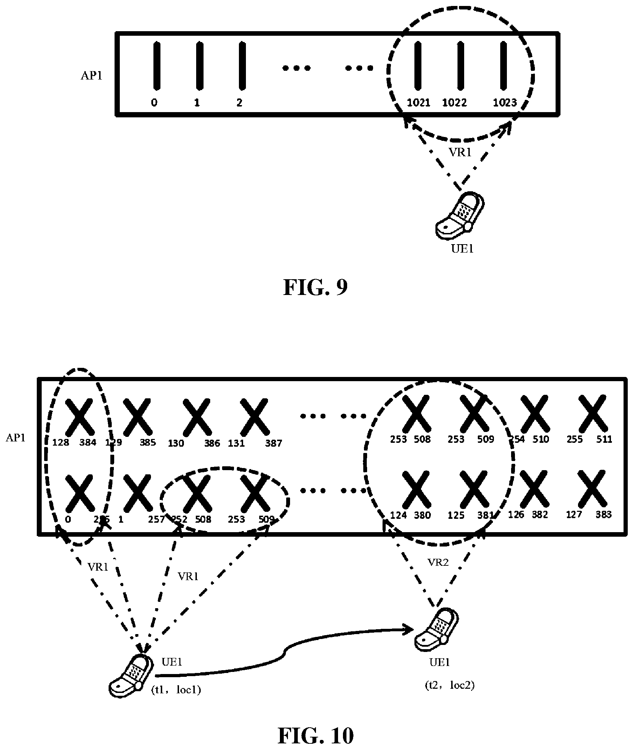

FIG. 9 is a diagram illustrating that a basis vector valid row indication bit is determined according to an embodiment. An example of determining the basis vector valid row indication bit according to one set of basis vector valid row indication bit variables and one basis vector valid row indication bit mapping function is shown in FIG. 9. The basis vector of UE 1 is a 1024*1 vector. According to the basis vector valid row indication bit variable i = {1021, 1022, 1023} and the basis vector valid row indication bit mapping function f(i) = i + 1, the basis vector valid row indication bit of UE 1 is determined to be {1022, 1023, 1024}.

An example of determining the basis vector valid row indication bit according to one set of basis vector valid row indication bit variables and multiple different basis vector valid row indication bit mapping functions is shown in FIG. 5. The basis vector of UE 1 is a 512*1 vector. According to the basis vector valid row indication bit variable i = {1, 2, 3} and the basis vector valid row indication bit mapping functions f1(i) = i + 1 and f2(i) = i + 257, the basis vector valid row indication bit of UE 1 is determined to be {2, 3, 4, 258, 259, 260}.

An example of determining the basis vector valid row indication bit according to multiple different sets of basis vector valid row indication bit variables and multiple different basis vector valid row indication bit mapping functions is shown in FIG. 6. The basis vector of UE 1 is a 512*1 vector. According to the basis vector valid row indication bit variables i = {1, 2, 125, 129, 130}, j = {0, 1, 124, 128, 129} and the basis vector valid row indication bit mapping functions f1(i) = i and f2(j) = j + 257, the basis vector valid row indication bit of UE 1 is determined to be {1, 2, 125, 129, 130, 257, 258, 381, 385, 386}.

An example of determining the basis vector valid row indication bit according to multiple different sets of basis vector valid row indication bit variables and one basis vector valid row indication bit mapping function is shown in FIG. 7. The basis vector of UE 1 is a 512*1 vector. According to the basis vector valid row indication bit variables i = {0, 1, 2, 128, 129, 130, 256, 257, 258, 384, 385, 386}, j = {2, 3, 258, 259}, k = {124, 125, 380, 381} and the basis vector valid row indication bit mapping function f(n) = n + 1, the basis vector valid row indication bit of UE 1 is determined to be {1, 2, 3, 4, 125, 126, 129, 130, 131, 257, 258, 259, 260, 381, 382, 385, 386, 387}.

When the basis vector valid row indication bit is determined in the preceding manners, the number of basis vector valid row indication bit variables and the number of basis vector valid row indication bit mapping functions need to be determined according to actual conditions. The preceding examples are for reference only.

Embodiment five

In this embodiment, execution details of determining the basis vector valid row indication bit by using the position information and the visible region mapping function are described.

The manner of determining the basis vector valid row indication bit according to the position information and the visible region mapping function includes determining the basis vector valid row indication bit according to real-time 3D coordinate information of the UE and one visible region mapping function; determining the basis vector valid row indication bit according to real-time 3D coordinate information of the UE and multiple visible region mapping functions; determining the basis vector valid row indication bit according to real-time 2D coordinate information of the UE and one visible region mapping function; or determining the basis vector valid row indication bit according to real-time 2D coordinate information of the UE and multiple visible region mapping functions.

In an actual communication system, the position of the UE changes in real time. The visible region range of the same AP for the UE at different locations is different. FIG. 10 is a diagram of a visible region changing with position information according to an embodiment. As shown in FIG. 10, the position coordinates of UE 1 at moment t1 and moment t2 are loc1 and loc2, respectively. The visible region ranges of AP 1 for UE 1 at moment t1 and moment t2 are VR1 and VR2, respectively. VR1 is formed by combining two continuous regions, while VR2 is constituted by only one continuous region. Therefore, the basis vector valid row indication bit of UE 1 at moment t1 can be determined through two visible region mapping functions f1,1 and f1,2 and the real-time coordinate loc1 of UE 1. Similarly, the basis vector valid row indication bit of UE 1 at moment t2 can be determined through one visible region mapping function f2,1 and the real-time coordinate loc2 of UE 1.

When the basis vector valid row indication bit is determined in the preceding manners, whether real-time coordinates of the UE use 2D or 3D information and whether multiple visible region mapping functions are adopted need to be determined according to actual conditions. The preceding examples are for reference only.

Embodiment six

In this embodiment, execution details of determining an extended vector from the basis vector and the basis vector valid row indication bit are described.

The manner of determining an extended vector according to the basis vector and the basis vector valid row indication bit includes the following: according to the basis vector and the basis vector valid row indication bit, elements of corresponding valid rows of the basis vector are kept unchanged, and elements of non-valid rows of the basis vector are set to zero, to obtain the extended vector.

As shown in FIG. 9, AP1 performs single-layer transmission for UE 1. The basis vector V0 of UE 1 is a 1024*1 vector, and the basis vector valid row indication bit s = {1022, 1023, 1024}. Elements of rows 1022, 1023, and 1024 of V0 are kept unchanged, and elements of other rows are set to zero, so as to obtain the extended vector V1, that is, V1 = P1 * V0, where P1 is a 1024*1024 matrix. In P1, only the elements at positions 1022, 1023, and 1024 on the diagonal are 1, and the remaining elements are 0.

As shown in FIG. 7, AP1 performs multi-layer transmission for UE1, with the number of transmission layers being 3. The basis vector V0 of UE 1 is a 512*1 vector. The valid row indication bits for each transmission layer of V0 are s1 = {1, 2, 3, 129, 130, 131, 257, 258, 259, 385, 386, 387}, s2 = {3, 4, 259, 260}, and s3 = {125, 126, 381, 382}, respectively. Elements of rows 1, 2, 3, 129, 130, 131, 257, 258, 259, 385, 386, and 387 of V0 are kept unchanged, and elements of other rows are set to zero, so as to obtain the extended vector V1 for the first transmission layer of V0. Elements of rows 1022, 1023, and 1024 of V0 are kept unchanged, and elements of other rows are set to zero, so as to obtain the extended vector V1 for the first transmission layer of V0. Elements of rows 3, 4, 259, and 260 of V0 are kept unchanged, and elements of other rows are set to zero, so as to obtain the extended vector V2 for the second transmission layer of V0. Elements of rows 125, 126, 381, and 382 of V0 are kept unchanged, and elements of other rows are set to zero, so as to obtain the extended vector V3 for the third transmission layer of V0. That is, V1 = P1 * V0, V2 = P2 * V0, V3 = P3 * V0. P1, P2, and P3 are all 512*512 matrices. In P1, only the elements at positions 1, 2, 3, 129, 130, 131, 257, 258, 259, 385, 386, and 387 on the diagonal are 1, and the remaining elements are 0. In P2, only the elements at positions 3, 4, 259, and 260 on the diagonal are 1, and the remaining elements are 0. In P3, only the elements at positions 125, 126, 381, and 382 on the diagonal are 1, and the remaining elements are 0.

As shown in FIG. 8, AP1 and AP2 perform joint transmission for UE 1, with the number of transmission layers being 1. The basis vectors of AP1 and AP2 for UE 1 are V0,1 and V0,2, respectively, both being 512*1 vectors. After row extension of V0,1 and V0,2, the basis vector V0 of UE 1 is [V0,1 ; V0,2], and V0 is a 1024*1 vector. The valid row indication bits of V0,1 and V0,2 in V0 are s1 = {127, 128, 383, 384} and s2 = {513, 641, 769, 897}, respectively. Elements of rows 127, 128, 383, 384, 513, 641, 769, and 897 of V0 are kept unchanged, and elements of other rows are set to zero, so as to obtain the extended vector V1 of V0. V1 = P1 * V0, where P1 is a 1024*1024 matrix. In P1, only the elements at positions 127, 128, 383, 384, 513, 641, 769, and 897 on the diagonal are 1, and the remaining elements are 0.

Embodiment seven

In this embodiment, a scheme of constructing a codebook from an extended vector is described. Methods of constructing a codebook according to an extended vector include but are not limited to the following:

For single-polarized antenna rank 1 transmission, the codebook $W = \frac{1}{\alpha_1}[V_1]$ or

$$W = \frac{1}{\alpha_1}\left[\sum_{j=1}^{M} \beta_{1,j} V_{1,j}\right] .$$

For dual-polarized antenna rank 1 transmission, the codebook $W = \frac{1}{\alpha_2}\begin{bmatrix} V_1 \\ \varphi V_1 \end{bmatrix}$ or

$$W = \frac{1}{\alpha_2}\begin{bmatrix} \sum_{j=1}^{M} \beta_{1,j} V_{1,j} \\ \sum_{j=1}^{M} \beta_{1,M+j} V_{1,j} \end{bmatrix} .$$

For dual-polarized antenna rank 2 transmission, the codebook $W = \frac{1}{\alpha_3}\begin{bmatrix} V_1 & V_2 \\ \varphi V_1 & -\varphi V_2 \end{bmatrix}$ or

$$W = \frac{1}{\alpha_3}\begin{bmatrix} \sum_{j=1}^{M} \beta_{1,j} V_{1,j} & \sum_{j=1}^{M} \beta_{2,j} V_{2,j} \\ \sum_{j=1}^{M} \beta_{1,M+j} V_{1,j} & \sum_{j=1}^{M} \beta_{2,M+j} V_{2,j} \end{bmatrix} .$$

For dual-polarized antenna rank 4 transmission, the codebook $W = \frac{1}{\alpha_4}\begin{bmatrix} V_1 & V_2 & V_1 & V_2 \\ \varphi V_1 & \varphi V_2 & -\varphi V_1 & -\varphi V_2 \end{bmatrix}$ or

$$W = \frac{1}{\alpha_3}\begin{bmatrix} \sum_{j=1}^{M} \beta_{1,j} V_{1,j} & \sum_{j=1}^{M} \beta_{2,j} V_{2,j} & \sum_{j=1}^{M} \beta_{1,j} V_{1,j} & \sum_{j=1}^{M} \beta_{2,j} V_{2,j} \\ \sum_{j=1}^{M} \beta_{1,M+j} V_{1,j} & \sum_{j=1}^{M} \beta_{2,M+j} V_{2,j} & -\sum_{j=1}^{M} \beta_{1,M+j} V_{1,j} & -\sum_{j=1}^{M} \beta_{2,M+j} V_{2,j} \end{bmatrix} .$$

$\alpha_1, \alpha_2, \alpha_3$ are power normalization factors, $\varphi$ is a polarization phase difference, $V_1, V_2, V_{1,j}$, and $V_{2,j}$ are extended vectors, $\beta_{1,j}, \beta_{2,j}, \beta_{1,M+j}, \beta_{2,M+j}$ are weighting coefficients of codebook W constituted by multiple different extended vectors, and M is the total number of different extended vectors constituting the codebook W.

Embodiment eight

In this embodiment, the main execution processes of the first communication node (UE side) and the second communication node (for example, base station side) are briefly described. The processes include the following: The BS sends indication information to the UE. The UE receives the indication information, determines a target basis vector according to the indication information, determines an extended vector, determines a feedback codebook, and feeds back channel state information using the codebook. The indication information includes first indication information and second indication information. The first indication information is configuration information of a basis codebook. The second indication information includes at least one or more of bitmap signaling, a basis vector valid row indication bit variable, a basis vector valid row indication bit mapping function, a visible region mapping function, and UE position information. The specific content included in the second indication information may be determined according to the manner of determining the basis vector valid row indication bit. For example, the second indication information may include (one or multiple sets of) basis vector valid row indication bit variables and (one or multiple) basis vector valid row indication bit mapping functions, may include a single or multiple bitmap signalings, or may include position information (real-time two-dimensional coordinate information or real-time three-dimensional coordinate information) and (one or multiple) visible region mapping functions. In addition, the UE position information may be indicated by the BS to the UE or may be determined by the UE.

For technical details not described in detail in this embodiment, reference may be made to any one of the preceding embodiments.

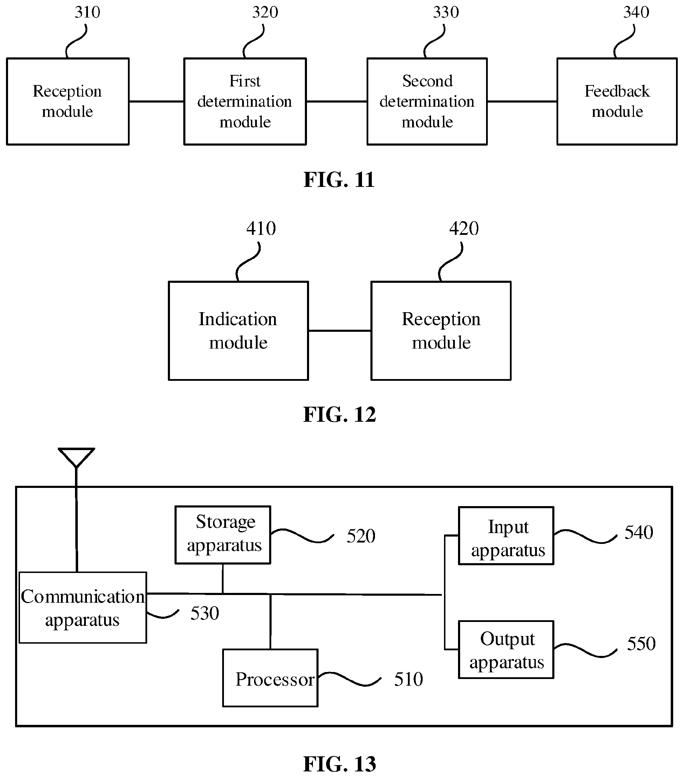

Embodiments of this application also provide a channel state information feedback apparatus. FIG. 11 is a diagram illustrating the structure of a channel state information feedback apparatus according to an embodiment. As shown in FIG. 11, the channel state information feedback apparatus includes a reception module 310, a first determination module 320, a second determination module 330, and a feedback module 340.

The reception module 310 is configured to receive indication information.

The first determination module 320 is configured to determine a target basis vector and a basis vector valid row indication bit according to the indication information.

The second determination module 330 is configured to determine a codebook according to the target basis vector and the basis vector valid row indication bit.

The feedback module 340 is configured to feed back channel state information using the codebook.

In the channel state information feedback apparatus in this embodiment, a target basis vector and a basis vector valid row indication bit are determined according to the indication information, a codebook is determined based on the target basis vector and the basis vector valid row indication bit, and channel state information is fed back, thereby improving the quality of the codebook and the reliability of fed-back channel state information considering the non-stationary characteristics of the channel.

In an embodiment, the indication information includes first indication information and second indication information.

The first indication information includes configuration information of a basis vector.

The second indication information includes at least one of bitmap signaling, a basis vector valid row indication bit variable, a basis vector valid row indication bit mapping function, a visible region mapping function, or position information.

In an embodiment, the first determination module 320 includes a first determination unit and a second determination unit.

The first determination unit is configured to determine the target basis vector according to the first indication information.

The second determination unit is configured to determine the basis vector valid row indication bit according to the second indication information.

In an embodiment, the second determination module 330 includes a vector determination unit and a codebook determination unit.

The vector determination unit is configured to determine an extended vector according to the target basis vector and the basis vector valid row indication bit.

The codebook determination unit is configured to determine the codebook according to the extended vector.

In an embodiment, the basis vector valid row indication bit is variable at different moments.

In an embodiment, the basis vector valid row indication bit is used to indicate a row index of the target basis vector.

In an embodiment, the basis vector valid row indication bit variable consists of one element, or the basis vector valid row indication bit variable consists of multiple different elements.

The multiple different elements include consecutive integers or non-consecutive integers.

In an embodiment, the apparatus also includes an association module.

The association module is configured to determine an association relationship between an antenna port index of an ELAA and a visible region according to the basis vector valid row indication bit.

In an embodiment, the position information includes real-time three-dimensional coordinate information or real-time two-dimensional coordinate information.

In an embodiment, the visible region mapping function is indicated by higher-layer signaling and is used to indicate a functional relationship between the position information and the basis vector valid row indication bit.

In an embodiment, the basis vector valid row indication bit mapping function is indicated by higher-layer signaling and is used to indicate a functional relationship between the basis vector valid row indication bit variable and the basis vector valid row indication bit.

In an embodiment, a value of each bit in the bitmap signaling is used to indicate whether a corresponding row in the target basis vector is valid.

In an embodiment, the second determination unit is configured to determine the basis vector valid row indication bit according to the basis vector valid row indication bit variable and the basis vector valid row indication bit mapping function.

Determining the basis vector valid row indication bit according to the basis vector valid row indication bit variable and the basis vector valid row indication bit mapping function includes one of the following: determining the basis vector valid row indication bit according to one set of basis vector valid row indication bit variables and one basis vector valid row indication bit mapping function; determining the basis vector valid row indication bit according to one set of basis vector valid row indication bit variables and multiple different basis vector valid row indication bit mapping functions; determining the basis vector valid row indication bit according to multiple different sets of basis vector valid row indication bit variables and one basis vector valid row indication bit mapping function; or determining the basis vector valid row indication bit according to multiple different sets of basis vector valid row indication bit variables and multiple different basis vector valid row indication bit mapping functions.

In an embodiment, the second determination unit is configured to determine the basis vector valid row indication bit according to the position information and the visible region mapping function.

Determining the basis vector valid row indication bit according to the position information and the visible region mapping function includes one of the following: determining the basis vector valid row indication bit according to the real-time three-dimensional coordinate information and one visible region mapping function; determining the basis vector valid row indication bit according to the real-time three-dimensional coordinate information and multiple visible region mapping functions; determining the basis vector valid row indication bit according to the real-time two-dimensional coordinate information and one visible region mapping function; or determining the basis vector valid row indication bit according to the real-time two-dimensional coordinate information and multiple visible region mapping functions.

In an embodiment, the second determination unit is configured to determine the basis vector valid row indication bit according to the bitmap signaling. Determining the basis vector valid row indication bit according to the bitmap signaling includes one of the following: determining the basis vector valid row indication bit according to a single bitmap signaling; or jointly determining the basis vector valid row indication bit according to multiple bitmap signalings.

In an embodiment, the vector determination unit is configured to keep elements of corresponding valid rows of the target basis vector unchanged, and set elements of non-valid rows of the target basis vector to zero, to obtain the extended vector.

The channel state information feedback apparatus provided in this embodiment and the channel state information feedback method provided in the preceding embodiments belong to the same inventive concept. For technical details not described in detail in this embodiment, reference may be made to any one of the preceding embodiments, and this embodiment has the same beneficial effects as implementing the channel state information feedback method.

Embodiments of this application also provide an indication information sending apparatus. FIG. 12 is a diagram illustrating the structure of an indication information sending apparatus according to an embodiment. As shown in FIG. 12, the indication information sending apparatus includes a sending module 410 and a reception module 420.

The sending module 410 is configured to send indication information, where the indication information is used to indicate a target basis vector and a basis vector valid row indication bit.

The reception module 420 is configured to receive channel state information fed back by using a codebook, where the codebook is determined according to the target basis vector and the basis vector valid row indication bit.

In the indication information sending apparatus in this embodiment, a target basis vector and a basis vector valid row indication bit are determined according to the indication information, a codebook is determined based on the target basis vector and the basis vector valid row indication bit, and channel state information is fed back, thereby improving the quality of the codebook and the reliability of fed-back channel state information considering the non-stationary characteristics of the channel.

In an embodiment, the indication information includes first indication information and second indication information.

The first indication information includes configuration information of a basis vector.

The second indication information includes at least one of bitmap signaling, a basis vector valid row indication bit variable, a basis vector valid row indication bit mapping function, a visible region mapping function, or position information.

The indication information sending apparatus provided by this embodiment and the indication information sending method provided in the preceding embodiments belong to the same inventive concept. For technical details not described in detail in this embodiment, reference may be made to any one of the preceding embodiments. This embodiment has the same beneficial effects as implementing the indication information sending method.

Embodiments of this application also provide a communication node. FIG. 13 is a diagram illustrating the hardware structure of a communication node according to an embodiment. As shown in FIG. 13, the communication node provided by this application includes a processor 510 and a memory 520. The communication node may include one or more processors 510, with one processor 510 shown in FIG. 13 as an example. The memory 520 is configured to store one or more programs that, when executed by the one or more processors 510, cause the one or more processors 510 to implement the channel state information feedback method or the indication information sending method described in the preceding embodiments of this application.

The communication node also includes a communication apparatus 530, an input apparatus 540, and an output apparatus 550.

The processor 510, the memory 520, the communication apparatus 530, the input apparatus 540, and the output apparatus 550 in the communication node may be connected via a bus or in other manners. Connection via the bus is used as an example in FIG. 13.

The input apparatus 540 may be configured to receive input digital or character information and generate key signal input related to user settings and function control of the communication node. The output apparatus 550 may include a display device, for example, a display screen.

The communication apparatus 530 may include a receiver and a transmitter. The communication apparatus 530 is configured to perform information transmission and reception communication under the control of the processor 510,

As a computer-readable storage medium, the memory 520 may be configured to store software programs, computer-executable programs, and modules, such as program instructions/modules (for example, the reception module 310, the first determination module 320, the second determination module 330, and the feedback module 340 in the channel state information feedback apparatus) corresponding to the channel state information feedback method described in the embodiments of this application. The memory 520 may include a program storage region and a data storage region. The program storage region may store an operating system and an application program required by at least one function. The data storage region may store data or the like created according to the use of the communication node. Additionally, the memory 520 may include a high-speed random-access memory and may also include a nonvolatile memory such as at least one disk memory, flash memory, or another nonvolatile solid-state memory. In some examples, the memory 520 may include memories that are remotely disposed with respect to the processor 510, and these remote memories may be connected to the communication node via a network. Examples of the preceding network include but are not limited to, the Internet, an intranet, a local area network, a mobile communication network, and a combination thereof.

Embodiments of this application also provide a storage medium. The storage medium stores a computer program that, when executed by a processor, causes the processor to perform any one of the channel state information feedback method or the indication information sending method described in the embodiments of this application. The channel state information feedback method includes receiving indication information, determining a target basis vector and a basis vector valid row indication bit according to the indication information, determining a codebook according to the target basis vector and the basis vector valid row indication bit, and feeding back channel state information using the codebook. The indication information sending method includes sending indication information, where the indication information is used to indicate a target basis vector and a basis vector valid row indication bit; and receiving channel state information fed back by using a codebook, where the codebook is determined according to the target basis vector and the basis vector valid row indication bit.

The computer storage medium in the embodiments of this application may adopt any combination of one or more computer-readable media. The computer-readable medium may be a computer-readable signal medium or a computer-readable storage medium. The computer-readable storage medium may be, for example, but is not limited to, an electrical, magnetic, optical, electromagnetic, infrared, or semiconductor system, apparatus, or device, or any combination thereof. Examples (a non-exhaustive list) of the computer-readable storage medium include an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc read-only memory (CD-ROM), an optical memory device, a magnetic memory device, or any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

The program codes included on the computer-readable medium may be transmitted on any suitable medium including, but not limited to, a wireless medium, a wire, an optical cable, a radio frequency (RF), or any suitable combination thereof.

Computer program codes for performing the operations of this application may be written in one or more programming languages or a combination of multiple programming languages. The programming languages include object-oriented programming languages such as Java, Smalltalk, and C++ and may also include conventional procedural programming languages such as "C" or similar programming languages. The program codes may be executed entirely on a user computer, partly on a user computer, as a stand-alone software package, partly on a user computer and partly on a remote computer, or entirely on a remote computer or a server. In a case related to the remote computer, the remote computer may be connected to the user computer via any type of network including a local area network (LAN) or a wide area network (WAN) or may be connected to an external computer (for example, via the Internet by an Internet service provider).

The preceding descriptions are only example embodiments of this application and are not intended to limit the scope of this application.

It is to be understood by those skilled in the art that the term user terminal encompasses any suitable type of wireless user device, for example, a mobile phone, a portable data processing apparatus, a portable web browser, or a vehicle-mounted mobile station.

Generally speaking, various embodiments of this application may be implemented in hardware or special-purpose circuits, software, logic, or any combination thereof. For example, some aspects may be implemented in hardware while other aspects may be implemented in firmware or software executable by a controller, a microprocessor, or another computing apparatus, though this application is not limited thereto.

Embodiments of this application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, state setting data, or source or object codes written in any combination of one or more programming languages.

A block diagram of any logic flow among the drawings of this application may represent program procedures, may represent interconnected logic circuits, modules, and functions, or may represent a combination of program procedures with logic circuits, modules, and functions. Computer programs may be stored in a memory. The memory may be of any type suitable for a local technical environment and may be implemented using any suitable data storage technology, such as, but not limited to, a ROM, a RAM, and an optical memory apparatus and system (a digital video disc (DVD) or a compact disk (CD)). The computer-readable medium may include a non-transitory storage medium. The data processor may be of any type suitable for a local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

The detailed description of example embodiments of this application has been provided above through exemplary and non-restrictive examples. However, considering the drawings and the claims, various modifications and adjustments to the preceding embodiments are apparent to those skilled in the art without deviating from the scope of this application. Accordingly, the proper scope of this application is determined according to the claims.

## Claims

1. A channel state information feedback method, comprising:

   receiving indication information;
   determining a target basis vector and a basis vector valid row indication bit according to the indication information;
   determining a codebook according to the target basis vector and the basis vector valid row indication bit; and
   feeding back channel state information using the codebook.

2. The channel state information feedback method according to claim 1, wherein the indication information comprises first indication information and second indication information;

   the first indication information comprises configuration information of a basis vector; and
   the second indication information comprises at least one of: bitmap signaling, a basis vector valid row indication bit variable, a basis vector valid row indication bit mapping function, a visible region mapping function, or position information.

3. The channel state information feedback method according to claim 2, wherein determining the target basis vector and the basis vector valid row indication bit according to the indication information comprises:

   determining the target basis vector according to the first indication information; and
   determining the basis vector valid row indication bit according to the second indication information.

4. The channel state information feedback method according to claim 1, wherein determining the codebook according to the target basis vector and the basis vector valid row indication bit comprises:

   determining an extended vector according to the target basis vector and the basis vector valid row indication bit; and
   determining the codebook according to the extended vector.

5. The channel state information feedback method according to claim 1, wherein the basis vector valid row indication bit is variable at different moments.

6. The channel state information feedback method according to claim 1, wherein the basis vector valid row indication bit is used to indicate a row index of the target basis vector.

7. The channel state information feedback method according to claim 2, wherein the basis vector valid row indication bit variable consists of one element; or
   the basis vector valid row indication bit variable consists of a plurality of different elements, wherein the plurality of different elements comprise consecutive integers or non-consecutive integers.

8. The channel state information feedback method according to claim 1, further comprising:
   determining an association relationship between an antenna port index of an extremely large aperture array (ELAA) and a visible region according to the basis vector valid row indication bit.

9. The channel state information feedback method according to claim 2, wherein the position information comprises real-time three-dimensional coordinate information or real-time two-dimensional coordinate information.

10. The channel state information feedback method according to claim 2, wherein the visible region mapping function is indicated by higher-layer signaling and is used to indicate a functional relationship between the position information and the basis vector valid row indication bit.

11. The channel state information feedback method according to claim 2, wherein the basis vector valid row indication bit mapping function is indicated by higher-layer signaling and is used to indicate a functional relationship between the basis vector valid row indication bit variable and the basis vector valid row indication bit.

12. The channel state information feedback method according to claim 2, wherein a value of each bit in the bitmap signaling is used to indicate whether a corresponding row in the target basis vector is valid.

13. The channel state information feedback method according to claim 2, wherein determining the basis vector valid row indication bit according to the indication information comprises:
    determining the basis vector valid row indication bit according to the basis vector valid row indication bit variable and the basis vector valid row indication bit mapping function by one of the following manners:

    determining the basis vector valid row indication bit according to one set of basis vector valid row indication bit variables and one basis vector valid row indication bit mapping function;
    determining the basis vector valid row indication bit according to one set of basis vector valid row indication bit variables and a plurality of different basis vector valid row indication bit mapping functions;
    determining the basis vector valid row indication bit according to a plurality of different sets of basis vector valid row indication bit variables and one basis vector valid row indication bit mapping function; or
    determining the basis vector valid row indication bit according to a plurality of different sets of basis vector valid row indication bit variables and a plurality of different basis vector valid row indication bit mapping functions.

14. The channel state information feedback method according to claim 9, wherein determining the basis vector valid row indication bit according to the indication information comprises:

determining the basis vector valid row indication bit according to the position information and the visible region mapping function by one of the following manners:

determining the basis vector valid row indication bit according to the real-time three-dimensional coordinate information and one visible region mapping function;
determining the basis vector valid row indication bit according to the real-time three-dimensional coordinate information and a plurality of visible region mapping functions;
determining the basis vector valid row indication bit according to the real-time two-dimensional coordinate information and one visible region mapping function; or
determining the basis vector valid row indication bit according to the real-time two-dimensional coordinate information and a plurality of visible region mapping functions.

15. The channel state information feedback method according to claim 2, wherein determining the basis vector valid row indication bit according to the indication information comprises:
determining the basis vector valid row indication bit according to the bitmap signaling by one of the following manners:

determining the basis vector valid row indication bit according to a single bitmap signaling; or
jointly determining the basis vector valid row indication bit according to a plurality of bitmap signalings.

16. The channel state information feedback method according to claim 4, wherein determining the extended vector according to the target basis vector and the basis vector valid row indication bit comprises:
keeping elements of corresponding valid rows of the target basis vector unchanged, and setting elements of non-valid rows of the target basis vector to zero, to obtain the extended vector.

17. An indication information sending method, comprising:

sending indication information, wherein the indication information is used to indicate a target basis vector and a basis vector valid row indication bit; and
receiving channel state information fed back by using a codebook, wherein the codebook is determined according to the target basis vector and the basis vector valid row indication bit.

18. The indication information sending method according to claim 17, wherein the indication information comprises first indication information and second indication information;

the first indication information comprises configuration information of a basis vector; and
the second indication information comprises at least one of: bitmap signaling, a basis vector valid row indication bit variable, a basis vector valid row indication bit mapping function, a visible region mapping function, or position information.

19. A communication node, comprising: a memory and at least one processor; wherein

the memory is configured to store at least one program; and
the at least one program, when executed by the at least one processor, causes the at least one processor to perform the channel state information feedback method according to any one of claims 1 to 16 or the indication information sending method according to any one of claims 17 and 18.

20. A computer-readable storage medium storing a computer program that when executed by a processor, performs the channel state information feedback method according to any one of claims 1 to 16 or the indication information sending method according to any one of claims 17 and 18.

Receive signaling information 110

Determine a target basis vector and a basis vector valid row indication bit according to the indication information 120

Determine a codebook according to the target basis vector and the basis vector valid row indication bit 130

Feed back channel state information using the codebook 140

**FIG. 1**

Send indication information, where the indication information is used to indicate a target basis vector and a basis vector valid row indication bit ~ 210

Receive channel state information fed back by using a codebook, where the codebook is determined according to the target basis vector and the basis vector valid row indication bit ~ 220

**FIG. 2**

**FIG. 3**

**FIG. 4**

**FIG. 5**

**FIG. 6**

**FIG. 7**

**FIG. 8**

**FIG. 9**

**FIG. 10**

EP 4 749 947 A1

310

Reception module

320

First determination module

330

Second determination module

340

Feedback module

**FIG. 11**

410

Indication module

420

Reception module

**FIG. 12**

Storage apparatus 520

Input apparatus 540

Communication apparatus 530

Processor 510

Output apparatus 550

**FIG. 13**

## INTERNATIONAL SEARCH REPORT

| International application No. |
| --- |
| **PCT/CN2024/083910** |

| A. | CLASSIFICATION OF SUBJECT MATTER |
| --- | --- |

H04B 7/06(2006.01)i

According to International Patent Classification (IPC) or to both national classification and IPC

| B. | FIELDS SEARCHED |
| --- | --- |

Minimum documentation searched (classification system followed by classification symbols)

IPC: H04B, H04L, H04W

Documentation searched other than minimum documentation to the extent that such documents are included in the fields searched

Electronic data base consulted during the international search (name of data base and, where practicable, search terms used)

CNTXT, CNKI, VEN, ENTXTC, 3GPP: 大规模, 超大孔径阵列, ELAA, 天线, 非平稳, 可见区域, 信道状态信息, 反馈, 索引, massive, extremely large aperture array, antenna, visible region, VR, channel state information, feedback, index

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 115250139 A (HUAWEI TECHNOLOGIES CO., LTD.) 28 October 2022 (2022-10-28) description, paragraphs 57-125 | 1, 4-6, 17, 19, 20 |
| A | CN 115412139 A (HUAWEI TECHNOLOGIES CO., LTD.) 29 November 2022 (2022-11-29) entire document | 1-20 |
| A | CN 115776317 A (HUAWEI TECHNOLOGIES CO., LTD.) 10 March 2023 (2023-03-10) entire document | 1-20 |
| A | US 2023098191 A1 (HUAWEI TECHNOLOGIES CO., LTD.) 30 March 2023 (2023-03-30) entire document | 1-20 |
| A | WO 2023001825 A1 (CONTINENTAL AUTOMOTIVE TECHNOLOGIES GMBH) 26 January 2023 (2023-01-26) entire document | 1-20 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **06 May 2024** | **15 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT Information on patent family members | | | | International application No. PCT/CN2024/083910 | | | |
|---|---|---|---|---|---|---|---|

| Patent document cited in search report | | | Publication date (day/month/year) | Patent family member(s) | | | Publication date (day/month/year) |
|---|---|---|---|---|---|---|---|
| CN | 115250139 | A | 28 October 2022 | None | | | |
| CN | 115412139 | A | 29 November 2022 | None | | | |
| CN | 115776317 | A | 10 March 2023 | None | | | |
| US | 2023098191 | A1 | 30 March 2023 | WO | 2021244376 | A1 | 09 December 2021 |
| | | | | EP | 4152633 | A1 | 22 March 2023 |
| | | | | EP | 4152633 | A4 | 01 November 2023 |
| | | | | BR | 112022024786 | A2 | 07 March 2023 |
| WO | 2023001825 | A1 | 26 January 2023 | KR | 20240021279 | A | 16 February 2024 |

Form PCT/ISA/210 (patent family annex) (July 2022)